# DEMANDE DE BREVET EUROPEEN

(11) **EP 4 706 937 A1**
(43) Date de publication de la demande: **11.03.2026**
(21) Numéro de dépôt: 25200605.1
(22) Date de dépôt: 05.09.2025
(51) Int. Cl.: B29C 49/04, B29C 49/10, B29C 49/20, B29C 49/42, B29C 49/60, B29C 49/22, B29K 23/00, B29L 31/00

(54) **PROCÉDÉ D'EXTRUSION SOUFFLAGE SURMOULAGE POUR LA PRODUCTION D'UNE POCHE SOUPLE BI-MATIÈRE OU BI-COULEUR**

(30) Priorité: 10.09.2024 FR 2409609
(71) Demandeur: Nextis, 71150 Demigny (FR)
(72) Inventeur: CELERIER, Yannick, 71510 ALUZE (FR); LAFIN, Benoit, 71370 Saint-Christophe en Bresse (FR); PAVIA, Franck, 21200 VIGNOLES (FR)
(74) Mandataire: Oudin, Stéphane

(57) **Abrégé**

Procédé d'extrusion soufflage pour la production d'une poche comprenant un col et un goulot en matériau plastique rigide et un corps en matériau thermoplastique souple caractérisé en ce qu'il comprend les étapes :
- [100] préparer ledit matériau thermoplastique souple à l'état pâteux,
- [200] former une paraison tubulaire creuse à partir du matériau préparé à l'étape [100],
- [300] disposer sur un support de soufflage un insert rigide formant le goulot et l'épaule de ladite enceinte,
- [400] couler ladite paraison de sorte à ce que son extrémité libre soit à l'intérieur dudit insert rigide,
[500] verrouiller des coquilles empreintes d'un moule de soufflage autour de ladite paraison et d'au moins une partie dudit insert rigide,
- [600] expanser l'extrémité libre de ladite paraison contre l'intérieur dudit insert rigide, puis
- [700] injecter un gaz sous pression à l'intérieur de ladite paraison de telle sorte à l'expanser par l'intérieur sur la surface interne dudit moule ou à l'expanser par l'extérieur en créant une dépression à l'intérieur dudit moule,
caractérisé en ce que durant l'étape [600] une section de ladite paraison à l'opposé de ladite extrémité libre n'est pas expansée.

## Description

### Domaine technique

La présente invention concerne un procédé d'extrusion soufflage pour la production d'un contenant comprenant un col et un goulot en matériau plastique rigide et un corps en matériau thermoplastique souple. La présente invention concerne également les poches souples obtenues par ledit procédé.

### Technique antérieure

Les poches souples destinées à contenir des liquides sont bien connues de l'art antérieur et servent notamment à transporter et à conserver des liquides destinés à l'alimentation ou à l'usage médical.

Parmi les poches destinées au transport de liquide alimentaire, on peut notamment citer les poches destinées au transport de boissons dans le cadre d'activités sportives (aussi appelées « camel bag »). Toutefois cet usage reste limité par rapport à celui des enceintes en plastique rigide (e.g. le polyéthylène) majoritaire dans le domaine.

L'usage des poches souples est beaucoup plus développé dans le domaine médical où la souplesse est particulièrement importante car elle permet d'obtenir des enceintes de volume nul (i.e. vide de gaz et notamment d'air ambiant) en absence de liquide intérieur. Ainsi, les poches souples permettent de maintenir l'asepsie des produits contenus (sang, solutions, médicaments) tout au long de leur utilisation.

A ce jour, la totalité des poches souples, de type poche médicale ou alimentaire, sont réalisées par soudures à haute fréquence ou à chaud, à partir de films thermoplastiques. Plus précisément, les poches sont réalisées par soudure de deux couches l'une sur l'autre, en épargnant la zone du contenu. En général, les films sont en PVC (Polychlorure de vinyle) ou en PP (Polypropylène) et les poches peuvent présenter différentes dimensions pour afficher un volume de contenu compris entre 50 et 1000 ml.

Les poches actuelles répondent à leur fonction principale mais présentent toutes des inconvénients dus à la fois aux matériaux, ainsi qu'au procédé de fabrication.

Le premier inconvénient est lié à l'usage obligatoire de plastifiant dans les matières thermoplastiques utilisées (particulièrement dans le cas du PVC). Ces différents plastifiants peuvent avoir tendance à migrer dans le liquide ce qui soulève des problèmes sanitaires importants, particulièrement lorsqu'il s'agit de liquides injectables ou ingérés par l'homme.

Par ailleurs, l'utilisation de films entraine un certain nombre d'étapes obligatoires parmi lesquelles on peut notamment citer le calandrage, la découpe, la soudure à plat et l'assemblage final de la poche obtenue avec l'insert faisant fonction de moyen de bouchage.

En plus d'être chronophage, ces différentes étapes engendrent des pertes de produits liées à la découpe et la production de structures gênantes telles des arêtes vives potentiellement coupantes.

Le déposant a développé des poches souples décrites notamment dans le brevet EP3377296 et leur procédé de production. Lesdites poches souples comprennent un insert rigide, qui forme par exemple l'ouverture de la poche, autour duquel est coulé une paraison d'un thermoplastique souple qui est ensuite formé dans un moule par soufflage.

DE1454902A1 divulgue un procédé d'extrusion soufflage pour la production d'une poche comprenant un col et un goulot en matériau plastique rigide et un corps en matériau thermoplastique souple.

La présente invention se propose donc d'offrir un procédé de production de poches souples destinées à contenir des liquides contournant les problèmes soulevés ci-dessus. Plus particulièrement, ledit procédé est plus économique et permet d'obtenir des poches souples sans arêtes et ne nécessitant pas forcément d'additifs tels que les plastifiants.

Par ailleurs, le procédé selon l'invention permet d'obtenir des poches composées uniquement de matières recyclables dans la filière actuelle et d'un poids plus réduit que les poches de l'art antérieur. En conséquence, les poches obtenues par le procédé selon l'invention ont un impact écologiques réduit.

Finalement, le procédé selon l'invention permet d'obtenir des poches ayant des caractéristiques esthétiques plus variées que les poches de l'art antérieur. Le procédé selon l'invention permet d'obtenir des poches dont la partie rigide a une couleur différente ou identique de celle de la partie souple. Le procédé selon l'invention permet également d'obtenir des poches de formes variées et plus uniquement cylindriques.

### Résumé de l'invention

Ainsi la présente invention concerne un procédé d'extrusion soufflage pour la production d'une poche comprenant un col et un goulot en matériau plastique rigide et un corps en matériau thermoplastique souple caractérisé en ce qu'il comprend les étapes :
- [100] préparer ledit matériau thermoplastique souple à l'état pâteux,
- [200] former une paraison tubulaire creuse à partir du matériau préparé à l'étape [100],
- [300] disposer sur un support de soufflage un insert rigide formant le goulot et l'épaule de ladite enceinte,
- [400] couler ladite paraison de sorte à ce que son extrémité libre soit à l'intérieur dudit insert rigide,
- [500] verrouiller des coquilles empreintes d'un moule de soufflage autour de ladite paraison et d'au moins une partie dudit insert rigide,
- [600] expanser l'extrémité libre de ladite paraison contre l'intérieur dudit insert rigide, puis
- [700] injecter un gaz sous pression à l'intérieur de ladite paraison de telle sorte à l'expanser par l'intérieur sur la surface interne dudit moule ou à l'expanser par l'extérieur en créant une dépression à l'intérieur dudit moule,
remarquable en ce que durant l'étape [600] une section de ladite paraison à l'opposé de ladite extrémité libre n'est pas expansée.

Dans le cadre de la présente invention, le terme « col » entend désigner la portion d'une enceinte formant la transition entre le goulot et le reste de l'enceinte. Le long du col la section droite de l'enceinte augmente graduellement pour atteindre sa surface maximum.

Dans le cadre de la présente invention, le terme « goulot » entend désigner la portion de l'enceinte comprenant l'ouverture de cette dernière.

Dans le cadre de la présente invention, le terme « rigide » entend désigner que la matière est faiblement déformable aux conditions de température et de pression classique (20°C, 1 bar) d'usage de l'enceinte selon l'invention.

Dans le cadre de la présente invention, le terme « souple » entend signifier que la matière présente une dureté shore 00 de 60 à 100 ou une dureté shore A de 0 à 80.

Dans le cadre de la présente invention, le terme « rigide » entend signifier que la matière présente une dureté shore 00 supérieure à 100 ou une dureté shore A supérieure à 80.

Dans le cadre de la présente invention, le terme « coquille empreinte » entend désigner les différentes parties d'un moule de soufflage. Dans le cadre de la présente invention le moule d'extrusion soufflage est composé d'au moins deux coquilles qui vont pouvoir s'assembler autour de l'insert pour former une enceinte étanche dans laquelle la paraison va pouvoir être soufflée.

Dans le cadre de la présente invention, le terme « paraison » entend désigner un cylindre creux dont la paroi est formée par ledit thermoplastique à l'état pâteux. Dans le domaine de l'extrusion-soufflage, les paraisons sont bien connues de l'homme du métier et sont obtenues classiquement par extrusion d'une matière pâteuse.

Dans le cadre de la présente invention, le terme « extrémité libre » entend désigner l'extrémité de la paraison la plus éloignée de l'extrudeuse qui l'a formée.

Selon l'invention, ledit support de soufflage est une canne de soufflage, comprenant au moins un premier moyen de soufflage, autour de laquelle ledit insert rigide est disposé annulairement.

Dans le cadre de la présente invention, le terme « annulairement » entend signifier que ledit insert est placé de sorte que son goulot soit traversé de part en part par ladite canne de soufflage.

Selon un mode de réalisation préféré de l'invention, l'au moins un premier moyen de soufflage débouche à l'extrémité de ladite canne.

Selon un mode de réalisation préféré de l'invention, le matériau thermoplastique souple est choisi dans le groupe constitué du polypropylène, polyéthylène, polybutène, SEBS, du polyuréthane thermoplastique et des élastomères thermoplastiques.

Selon un mode de réalisation préféré de l'invention, le matériau thermoplastique souple est un élastomère thermoplastique recyclable.

Selon un mode de réalisation préféré de l'invention, ledit insert rigide est en polypropylène ou polyéthylène.

Selon un mode de réalisation préféré de l'invention, ledit insert rigide est en matières thermoplastiques recyclables.

Selon un mode de réalisation préféré de l'invention, ladite paraison de matériau thermoplastique souple à l'état pâteux vient à l'intérieur dudit insert rigide sous l'effet de la gravité.

Selon un mode de réalisation préféré de l'invention, ladite canne de soufflage comprend en outre un moyen d'expansion apte à expanser l'extrémité libre de ladite paraison contre l'intérieur dudit insert rigide.

Selon un mode de réalisation préféré de l'invention, ledit moyen d'expansion est au moins un doigt, associé à ladite canne, apte à passer d'une position rétractée à une position déployée où ledit doigt est en appui sur l'extrémité libre de ladite paraison.

Selon un mode de réalisation préféré de l'invention, ledit doigt est monté pivotant sur l'extrémité de ladite canne de soufflage.

Selon un mode de réalisation préféré de l'invention, ledit moyen d'expansion est un au moins deuxième moyen de soufflage débouchant perpendiculairement à l'axe longitudinale de ladite canne de soufflage.

La présente invention concerne également une poche remarquable en ce qu'elle est obtenue par l'un quelconque des procédés selon l'invention.

La présente invention concerne également une canne de soufflage, pour procédé d'extrusion-soufflage selon l'invention, comprenant un corps cylindrique et au moins un doigt, associé à ladite canne, apte à passer d'une position rétractée à une position déployée où ledit doigt s'étend latéralement à l'axe longitudinal de ladite canne.

La présente invention concerne également une canne de soufflage, pour procédé d'extrusion-soufflage selon l'invention, comprenant un corps cylindrique et au moins un premier moyen de soufflage débouchant à son extrémité distale et au moins un deuxième moyen de soufflage débouchant perpendiculairement à l'axe longitudinal dudit corps cylindrique.

La canne de soufflage selon l'invention peut également être utilisé dans un procédé de surmoulage intérieur ou extérieur d'un insert quellle que soit la géométrie de ce dernier.

Dans le cadre de la présente invention, le terme « cylindrique » n'est pas limité aux cylindres de section circulaire. Toutefois, préférentiellement ledit cylindre a une section circulaire ou ovoïde.

### Brève description des figures

[Fig. 1] présente la première étape d'un mode de réalisation d'un procédé selon l'invention mettant en œuvre des moyens d'expansion pneumatique.
[Fig. 2] présente la deuxième étape d'un mode de réalisation d'un procédé selon l'invention mettant en œuvre des moyens d'expansion pneumatique.
[Fig. 3] présente la troisième étape d'un mode de réalisation d'un procédé selon l'invention mettant en œuvre des moyens d'expansion pneumatique.
[Fig. 4] présente la quatrième étape d'un mode de réalisation d'un procédé selon l'invention mettant en œuvre des moyens d'expansion pneumatique.
[Fig. 5] présente la première étape d'un mode de réalisation d'un procédé selon l'invention mettant en œuvre des moyens d'expansion mécanique.
[Fig. 6] présente la deuxième étape d'un mode de réalisation d'un procédé selon l'invention mettant en œuvre des moyens d'expansion mécanique.
[Fig. 7] présente la troisième étape d'un mode de réalisation d'un procédé selon l'invention mettant en œuvre des moyens d'expansion mécanique.
[Fig. 8] présente la quatrième étape d'un mode de réalisation d'un procédé selon l'invention mettant en œuvre des moyens d'expansion mécanique et pneumatique.
[Fig. 9] présente la quatrième étape d'un mode de réalisation d'un procédé de surmoulage mettant en œuvre une canne selon l'invention.

### Description détaillée de l'invention

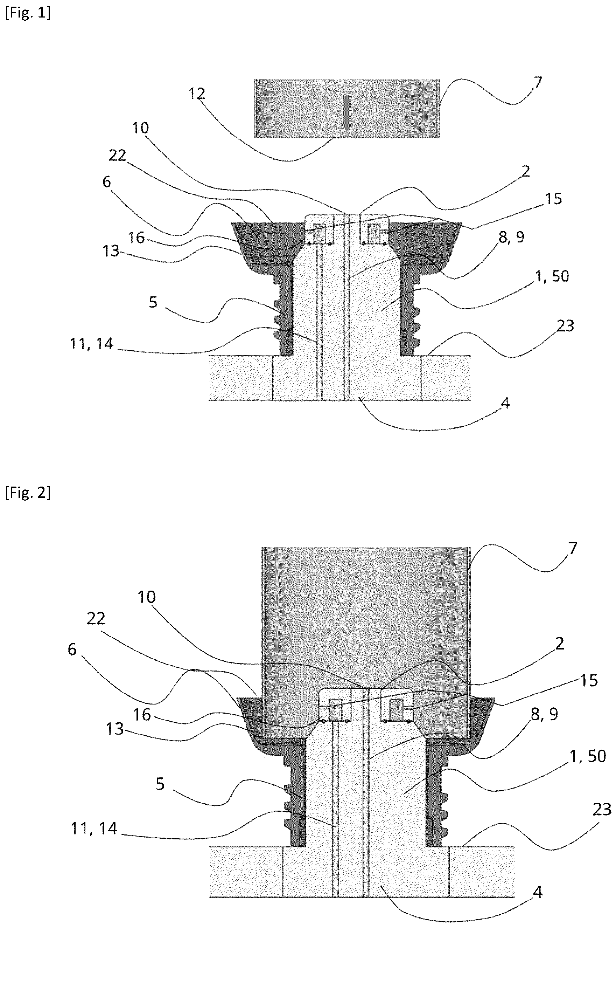

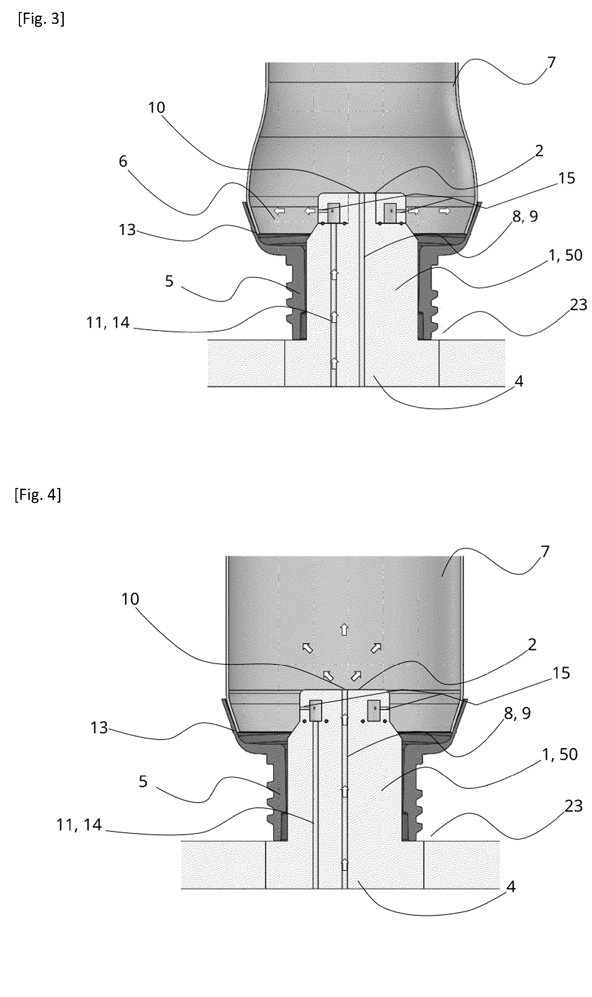

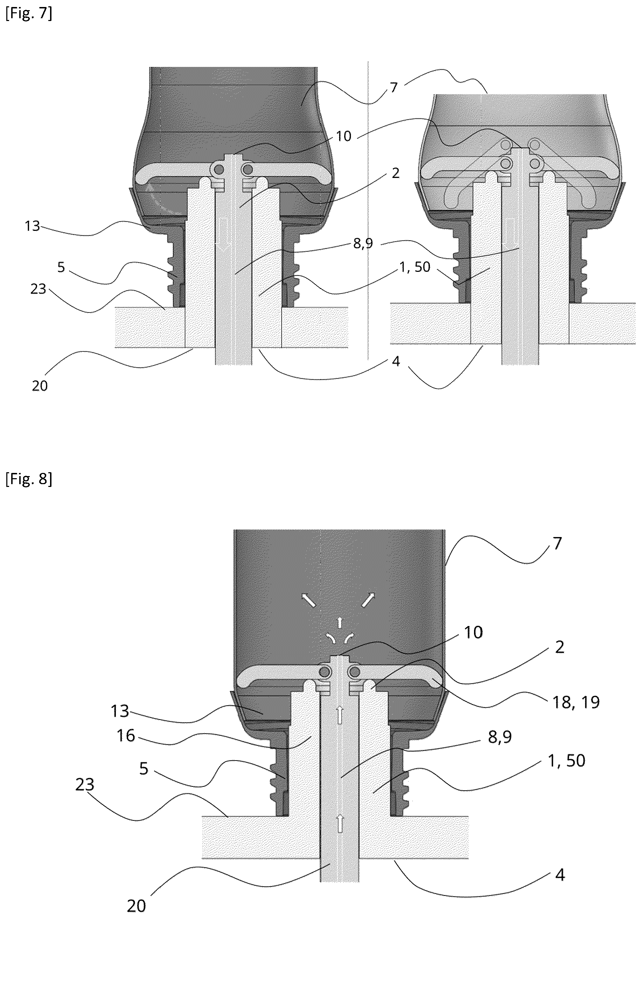

En référence aux figures 1-8 sont décrits ci-après deux modes de réalisation du procédé selon l'invention.

Selon un premier mode de réalisation présenté aux figures 1-4, l'expansion de la paraison est entièrement réalisée par au moins deux flux de gaz.

Ce mode de réalisation met en œuvre une canne de soufflage 1. Cette dernière comprend préférentiellement un corps sensiblement cylindrique 50 s'étendant selon un axe longitudinal. Préférentiellement, ladite canne de soufflage 1 comprend une extrémité distale 2, destinée à être introduite à l'intérieur d'un moule 3, et une extrémité proximale 4 destinée à rester à l'extérieur du moule 3.

Le corps cylindrique de la canne de soufflage 1 a préférentiellement une section droite congruente à la section droite du goulot 5 de l'insert 6 permettant ainsi le passage de ladite canne de soufflage 1 au travers dudit goulot 5. Ladite portion cylindrique a par ailleurs préférentiellement une longueur au moins égale à la hauteur du goulot 5 permettant ainsi le soufflage d'une paraison 7.

La canne de soufflage 1 comprend également un premier moyen de soufflage 8 destiné à expanser l'ensemble de la paraison 7 contre les parois du moule 3. Préférentiellement ledit premier moyen de soufflage 8 est un canal 9 apte à conduire un flux de gaz (e.g. de l'air) à l'intérieur de ladite canne de soufflage 1 vers l'extérieur de cette dernière au niveau d'au moins une première bouche de soufflage 10.

Ladite première bouche de soufflage 10 débouche préférentiellement au niveau de l'extrémité distale 2 de la canne de soufflage 1 et est préférentiellement orientée de sorte à produire un flux de gaz parallèle à l'axe longitudinal du corps cylindrique. Ce faisant ladite bouche de soufflage 10 permet l'expansion de l'ensemble de la paraison 7 dans le moule 3.

La canne de soufflage peut comprendre plusieurs premières bouches de soufflage 10 alimentées chacune par un canal 9 différent ou par le même canal 9.

Dans ce mode de réalisation, la canne de soufflage 1 comprend un deuxième moyen de soufflage 11 destiné à expanser l'extrémité libre 12 de la paraison 7 contre l'épaule 13 de l'insert rigide 6.

Préférentiellement ledit deuxième moyen de soufflage 11 est un canal 14 apte à conduire un flux de gaz (e.g. de l'air) à l'intérieur de ladite canne de soufflage 1 vers l'extérieur de cette dernière au niveau d'au moins une deuxième bouche de soufflage 15.

Ladite deuxième bouche de soufflage 15 débouche préférentiellement au niveau de la paroi latérale 16 du corps 50 de la canne de soufflage 1 et est préférentiellement orientée de sorte à produire un flux de gaz sensiblement perpendiculaire à l'axe longitudinal du corps 50. Ce faisant ladite deuxième bouche de soufflage 15 permet une expansion limitée à l'extrémité libre 12 de la paraison 7 dans le moule 3. On comprend ainsi que la deuxième bouche de soufflage 15 est donc avantageusement disposée sur la canne de soufflage 1 en regard de l'épaule 13 de l'insert rigide 6 lorsque ce dernier est en position sur la canne de soufflage 1.

La canne de soufflage 1 comprend avantageusement plusieurs deuxièmes bouches de soufflage 15 alimentées chacune par un canal 14 identique ou différent. Préférentiellement, lesdits deuxième bouche de soufflage 15 sont réparties régulièrement autour de la canne de soufflage 1.

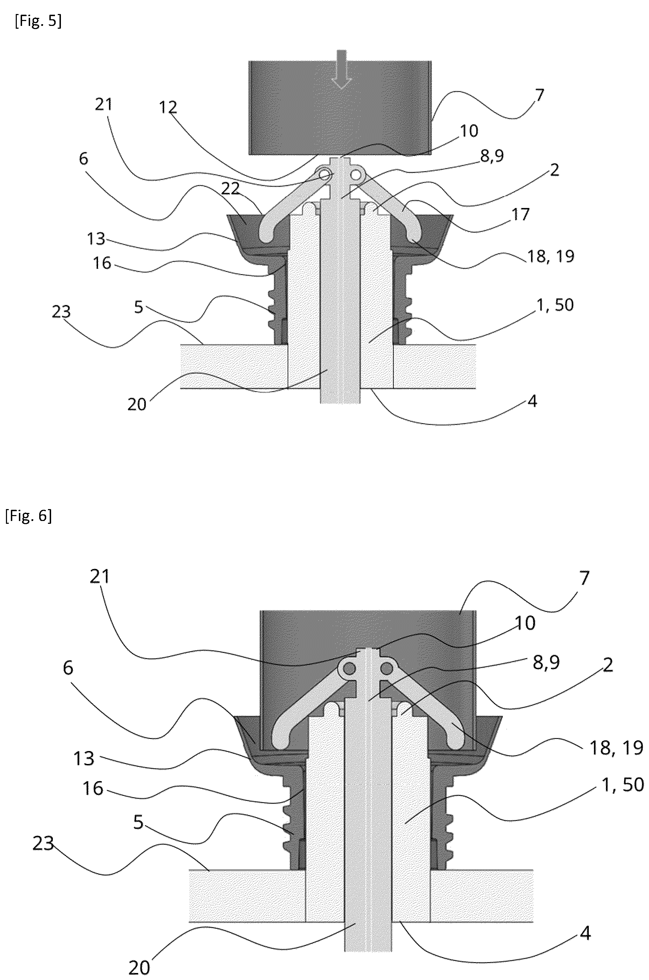

Selon un deuxième mode de réalisation présenté aux figures 5-8, l'expansion de l'extrémité libre 12 de la paraison 7 est entièrement réalisée par un moyen mécanique d'expansion.

De façon similaire au mode de réalisation précédemment décrit, ce mode de réalisation met en œuvre une canne de soufflage 1. Cette dernière comprend préférentiellement un corps 50 sensiblement cylindrique s'étendant selon un axe longitudinal. Préférentiellement, ledit corps 50 comprend une extrémité distale 2, destinée à être introduite à l'intérieur d'un moule 3, et une extrémité proximale 4 destinée à rester à l'extérieur du moule 3.

Le corps 50 de la canne de soufflage 1 a également préférentiellement une section droite congruente à la section droite du goulot 5 de l'insert 6 permettant ainsi le passage de ladite canne de soufflage 1 au travers dudit goulot 5. Ledit corps 50 a par ailleurs préférentiellement une longueur au moins égale à la hauteur du goulot 5 permettant ainsi le soufflage d'une paraison 7.

La canne de soufflage 1 comprend également un premier moyen de soufflage 8 destiné à expanser l'ensemble de la paraison 7 contre les parois du moule 3. Préférentiellement ledit premier moyen de soufflage 8 est un canal 9 apte à conduire un flux de gaz (e.g. de l'air) à l'intérieur de ladite canne de soufflage 1 vers l'extérieur de cette dernière au niveau d'au moins une première bouche de soufflage 10.

Ladite première bouche de soufflage 10 débouche préférentiellement au niveau de l'extrémité distale 2 de la canne de soufflage 1 et est préférentiellement orientée de sorte à produire un flux de gaz parallèle à l'axe longitudinal du corps cylindrique. Ce faisant ladite bouche de soufflage 10 permet l'expansion de l'ensemble de la paraison 7 dans le moule 3.

La canne de soufflage peut comprendre plusieurs premières bouches de soufflage 10 alimentées chacune par un canal 9 différent ou par le même canal 9.

Dans ce mode de réalisation, la canne de soufflage 1 comprend un moyen d'expansion mécanique 17 destiné à expanser l'extrémité libre 12 de la paraison 7 contre l'épaule 13 de l'insert rigide 6.

L'homme du métier sait comment associer un moyen d'expansion 17 apte à remplir la fonction selon l'invention. Le mode de réalisation ci-dessous n'est qu'une illustration non limitative de ce mode de réalisation plus général.

Préférentiellement ledit moyen d'expansion mécanique 17 comprend moins un doigt 18, associé à la canne de soufflage 1. L'extrémité libre 19 du doigt 18 est monté sur le corps 50 de la canne de soufflage 1 de sorte à pouvoir s'en éloigner et s'en rapprocher jusqu'à une position déployée où ladite extrémité libre 19 est en appui sur l'extrémité libre 12 de ladite paraison 7.

Préférentiellement, ledit doigt 18 est monté pivotant, sur le corps cylindrique de la canne de soufflage 1, autour d'un axe horizontal entre sa position repliée et sa position déployée.

Le passage de la position repliée à la position déployée peut être mis en œuvre par tous moyens connus de l'homme du métier. Selon un mode de réalisation préféré de l'invention, la canne de soufflage 1 comprend une tige 20, coulissant à l'intérieur du corps 50 entre une position avancée et une position rétractée. A l'extrémité 21 de la tige 20 est positionné l'axe horizontale autour duquel pivote le doigt 18. En position avancée, l'extrémité de la tige 20 déborde du corps 50 permettant au doigt 18 de se placer en position repliée sous l'effet de la gravité. En position rétractée, la tige 20 coulisse à l'intérieur du corps 50 de sorte que le doigt 18 soit en appui sur l'extrémité distale dudit corps 50 provoquant ainsi sa rotation autour de l'axe horizontale et son passage en position déployée.

Préférentiellement, ledit moyen d'expansion mécanique 17 comprend plusieurs doigts 18, tels que décrits précédemment, réparties autour du corps 50 de la canne de soufflage 1. Encore plus préférentiellement, ledit moyen d'expansion mécanique 17 comprend entre trois et six doigts 18 répartis uniformément autour du corps 50 de la canne de soufflage 1.

L'invention n'est pas limitée aux deux modes de réalisation présentés aux Figs 1-8. Il est, par exemple, également possible d'obtenir l'expansion de l'extrémité libre 12 de la paraison 7 par des moyens mixtes combinant des moyens d'expansion mécanique à des moyens d'expansion pneumatique.

Quel que soit le moyen d'expansion utilisé, la cinématique du procédé selon l'invention comprend les étapes :
- [100] dans laquelle le matériau thermoplastique souple est préparé de sorte à être l'état pâteux.

Dans la cadre de la présente invention, le matériau thermoplastique souple peut être choisie par tous les thermoplastiques utilisables dans le cadre des procédé d'extrusion soufflage et qui demeurent souples à température ambiante. Préférentiellement ledit matériau thermoplastique est choisi dans le groupe constitué par les polyoléfines et élastomères souples recyclables.

Ces matériaux sont disponibles notamment sous forme de granules et peuvent être mis sous forme pâteuse par chauffage. Lors de cette étape [100], le matériau thermoplastique souple peut être additionné d'adjuvant permettant de modifier ses propriétés physique et/ou esthétiques. Parmi ces différents adjuvants, on peut notamment citer les élastomères thermoplastiques.

Cette dernière étape peut être notamment réalisées dans une extrudeuse dont le cylindre et /ou la vis sans fin est maintenu à une température suffisante pour faire passer le matériau thermoplastique souple à l'état pâteux. Avantageusement ladite extrudeuse se termine par une filière d'extrusion permettant de réaliser l'étape :
- [200] former une paraison tubulaire creuse à partir du matériau préparé à l'étape [100].

L'homme du métier spécialisé dans le domaine de l'extrusion soufflage est parfaitement apte à choisir la filière apte à produire la paraison 7 tubulaire adaptée à la production de l'enceinte selon l'invention.

Selon un mode de réalisation particulièrement préféré de l'invention, ladite filière est disposée de sorte que ladite paraison tubulaire puisse descendre par gravité dans le moule de soufflage.
- [300] disposer sur un support de soufflage un insert 6 rigide formant le goulot 5 et l'épaule 13 de ladite enceinte.

Selon un mode de réalisation préféré de l'invention ledit insert 6 rigide est constitué d'une polyoléfine recyclable.

L'insert rigide 6 utilisé dans le cadre de la présente invention comprend au moins un goulot 5 et l'épaule 13 de la future enceinte. Ledit goulot 5 est une ouverture classique d'une enceinte destinée à contenir un liquide. Il peut par exemple s'agir d'un goulot présentant un filetage externe permettant la mise en place d'un bouchon.

L'épaule 13 correspond à la zone de la future enceinte reliant le goulot 5 au reste de l'enceinte. Avantageusement ladite épaule 13 a une section droite croissante du goulot 5 vers son bord libre. Selon un mode de réalisation préféré de l'invention, ladite épaule comprend une portion de section droite constante s'étendant à partir de son bord libre 22. Cette portion est plus particulièrement destinée à recevoir la paraison tubulaire sur sa face interne.

Préférentiellement, ledit insert rigide 6 est orienté sur la canne de soufflage 1 de sorte à ce que ledit goulot 5 soit en dessous de l'épaule 13. Ainsi, la paraison 7 peut accéder à l'intérieur de l'insert 6 par gravité.

Le support de soufflage permet de maintenir en position ledit insert rigide 6 pendant l'étape de soufflage. Préférentiellement, ce support de soufflage est une canne de soufflage 1 telle que décrite précédemment. Le corps 50 de la canne 1 est destiné à venir s'insérer dans le goulot 5 et empêcher ainsi le déplacement latéral de l'insert rigide 6. Préférentiellement, la base de la canne de soufflage 1 est positionnée sur une plate-forme 23 s'étendant perpendiculairement à l'axe longitudinal de la canne 1 et destinée à limiter le déplacement de l'insert 6 selon l'axe longitudinal de la canne 1.
- [400] couler ladite paraison 7 de sorte à ce que son extrémité libre 12 soit à l'intérieur dudit insert rigide 6.

Préférentiellement, la paraison 7 s'écoule par gravité depuis la filière de l'extrudeuse jusqu'à l'intérieur de l'insert rigide 6. Selon un mode de réalisation encore plus préféré, l'invention met en œuvre un moyen permettant de détecter la position de l'extrémité libre 12 de la paraison 7. Ce moyen permet de déterminer si la paraison 7 est suffisamment descendue pour couvrir l'intégralité du moule et l'intérieur de l'épaule 13 de l'insert rigide 6.

Ledit moyen permettant de détecter la position de l'extrémité libre 12 de la paraison 7 peut prendre différentes formes. Parmi celles-ci on peut notamment citer celles basées sur des détecteurs mécaniques ou optiques.

Une fois que l'extrémité 12 de la paraison 7 est à l'intérieur de l'insert rigide 13, l'une quelconque des étapes [500] ou [600] peut être indifféremment mise en œuvre. Selon un mode de réalisation préféré de l'invention, l'étape [500] est mise en œuvre avant l'étape [600].

[500] verrouiller des coquilles empreintes d'un moule de soufflage autour de ladite paraison 7 et d'au moins une partie dudit insert rigide 6.

Les coquilles empreintes utilisées dans le cadre du procédé selon l'invention sont des coques classiques pour moule d'extrusion soufflage. Lesdits coquilles peuvent couvrir intégralement ou partiellement l'insert rigide 6 une fois qu'elles sont verrouillées. Avantageusement, lesdites coquilles couvrent intégralement les parois de l'insert rigide 6 une fois verrouillées.

Classiquement, le moule utilisé dans le procédé selon l'invention comprendre deux coquilles empreintes. Toutefois, un moule comprenant plus de deux coquilles empreintes peut également être envisagés.
- [600] expanser l'extrémité libre 12 de ladite paraison 7 contre l'intérieur dudit insert rigide 6.

Lors de cette étape seule la portion de la paraison 7 destinée à être au contact de l'insert rigide 6 est expansée par le moyen d'expansion. Le reste de la paraison 7 est expansé ultérieurement contre la paroi du moule durant l'étape :
|700] injecter un gaz sous pression à l'intérieur de ladite paraison 7 de telle sorte à l'expanser par l'intérieur sur la surface interne dudit moule ou à l'expanser par l'extérieur en créant une dépression à l'intérieur dudit moule,

La séquence successive entre les étapes [600] et [700] permet d'assurer une parfaite étanchéité entre la paraison 7 et l'insert 6 et permet ainsi d'obtenir une enceinte de qualité supérieure à celles de l'art antérieur.

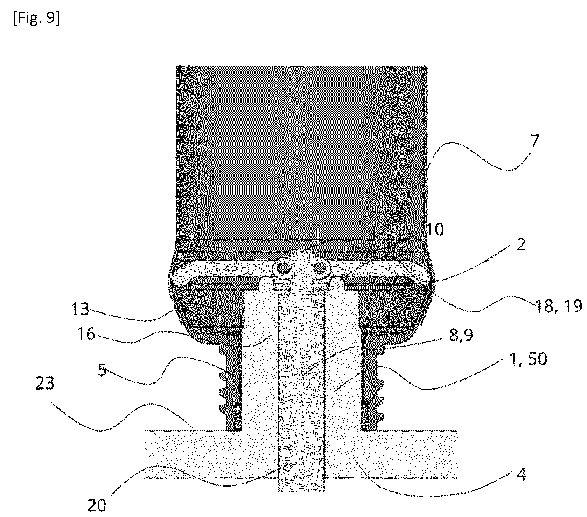

Comme illustré à la [Fig. 9], la canne de soufflage selon l'invention peut également être utilisée dans d'autres procédé que le procédé selon l'invention. Notamment, la canne de soufflage selon l'invention peut être utilisée dans des procédés de surmoulage.

## Revendications

1. Procédé d'extrusion soufflage pour la production d'une poche comprenant un col (13) et un goulot (5) en matériau plastique rigide et un corps en matériau thermoplastique souple **caractérisé en ce qu'**il comprend les étapes :
- [100] préparer ledit matériau thermoplastique souple à l'état pâteux,
- [200] former une paraison (7) tubulaire creuse à partir du matériau préparé à l'étape [100],
- [300] disposer sur un support de soufflage (1) un insert rigide (6) formant le goulot (5) et l'épaule (13) de ladite enceinte,
- [400] couler ladite paraison (7) de sorte à ce que son extrémité libre (12) soit à l'intérieur dudit insert rigide (6),
[500] verrouiller des coquilles empreintes d'un moule de soufflage autour de ladite paraison (7) et d'au moins une partie dudit insert rigide (6),
- [600] expanser l'extrémité libre (12) de ladite paraison (7) contre l'intérieur dudit insert rigide (6), puis
- [700] injecter un gaz sous pression à l'intérieur de ladite paraison (7) de telle sorte à l'expanser par l'intérieur sur la surface interne dudit moule ou à l'expanser par l'extérieur en créant une dépression à l'intérieur dudit moule,
**caractérisé en ce que** durant l'étape [600] une section de ladite paraison (7) à l'opposé de ladite extrémité libre (12) n'est pas expansée,
et **en ce qu'**il ledit support de soufflage (1) est une canne de soufflage (1) comprenant au moins un premier moyen de soufflage (8) et **en ce que** ledit insert rigide (6) est disposé annulairement autour de ladite canne (1).

2. Procédé d'extrusion soufflage pour la production d'une poche selon la revendication précédente caractérisé en ce l'au moins un premier moyen de soufflage (8) débouche à l'extrémité (2) de ladite canne (1).

3. Procédé d'extrusion soufflage pour la production d'une poche selon l'une des revendications précédentes **caractérisé en ce que** le matériau thermoplastique souple est un polyuréthane choisi dans le groupe constitué du polypropylène, polyéthylène, polybutène, SEBS, du polyuréthane thermoplastique et des élastomères thermoplastiques.

4. Procédé d'extrusion soufflage pour la production d'une poche selon l'une des revendications précédentes **caractérisé en ce que** ledit insert rigide est en en polypropylène, polyéthylène ou en matières thermoplastiques recyclables.

5. Procédé d'extrusion soufflage pour la production d'une poche selon l'une des revendications précédentes **caractérisé en ce que** ladite paraison (7) de matériau thermoplastique souple chaud à l'état pâteux vient à l'intérieur dudit insert rigide (6) sous l'effet de la gravité.

6. Procédé d'extrusion soufflage pour la production d'une poche selon l'une des revendications précédentes **caractérisé en ce que** ladite canne de soufflage (1) comprend en outre un moyen d'expansion apte à expanser l'extrémité libre (12) de ladite paraison (7) contre l'intérieur dudit insert rigide (6).

7. Procédé d'extrusion soufflage pour la production d'une poche selon la revendication précédente **caractérisé en ce que** ledit moyen d'expansion est au moins un doigt (18), associé à ladite canne (1), apte à passer d'une position rétractée à une position déployée où ledit doigt (18) est en appui sur l'extrémité libre (12) de ladite paraison (7).

8. Procédé d'extrusion soufflage pour la production d'une poche selon la revendication précédente **caractérisé en ce que** ledit doigt (18) est monté pivotant sur l'extrémité de ladite canne de soufflage (1).

9. Procédé d'extrusion soufflage pour la production d'une poche selon la revendication 6 **caractérisé en ce que** ledit moyen d'expansion est un au moins deuxième moyen de soufflage (11) débouchant perpendiculairement à l'axe longitudinal de la cane de soufflage (1).
